# EUROPEAN PATENT APPLICATION

(11) **EP 1 259 084 A1**
(43) Date of publication of application: **20.11.2002**
(21) Application number: 01201862.8
(22) Date of filing: 17.05.2001
(51) Int. Cl.: H04Q 3/00, H04L 12/24

(54) **Network system for connecting end-users and service providers**

(71) Applicant: Libertel Netwerk B.V., 6221 KX Maastricht (NL)
(72) Inventor: Venlet, Bart Nicolaas, 6223 HA Maastricht (NL); Kocsi, Istvan, 5215 EJ 's-Hertogenbosch (NL)
(74) Representative: Prins, Adrianus Willem

(57) **Abstract**

Network system for connecting end-users and service providers such as value added service providers, applications service providers, suppliers and specialised portals so that information between the end-users on the one hand and the service providers on the other hand can be exchanged, characterised in that the network system further comprises one single interface that enables communication between mutually independent separate layers of the network system on the one hand and mutually independent separate layers of the service providers on the other hand wherein the said layers of both the network and the service providers, comprise a layer of management, application layer, service enablers layer, a control layer and a data transport layer.

## Description

The invention relates to a network system for connecting end-users and service providers, such as value added service providers, application service providers and specialised portals so that information between the end-user on the one hand and the service providers on the other hand can be smoothly exchanged.

By 2003, 3G (third generation) mobile communications networks will have been rolled out through most of the European Union with radio capacity massively available in the densely populated areas. GSM will still be in use in order to provide for the necessary, cost-efficient overlay coverage whenever and wherever 3G capabilities are not (yet) available or not required. Services offered by 3G networks will be mostly limited by imagination: streamed multimedia, transactions, video conferencing, interactive games etc. They will be delivered through a single, multi-service network, adapted to computing, content and communications at the same time. Furthermore, 3G networks will be smartly integrated with other types of private and public network and broadcast systems such as the public Internet or digital marketplaces. Services delivered through 3G networks to the end-users will be largely personalised, customised and contextualised. Service subscribers and users will be able to use or transport their personal service environment across networks and terminals (aka Virtual Home Environment) and consequently will experience predominantly seamless services. Mobile terminals will evolve from the current plain speech box to an intelligent, interactive, multimedia companion. Eventually, the User will be in the driving seat, enabled to select and use services that fulfils best his requirements (or even wishes), anyhow, anywhere, anytime, from a variety of terminals, within the limitations of the actual communications context.

Therefore, it is foreseen that in the context of 3G mobile communications the basis for competition will shift from communications infrastructure to services. In order to capture and to sustain customer interest in advanced mobile communications based services in general and specifically in a given operator brand, ever-new applications and services will have to be developed and marketed at a relatively fast space. 3G network operators and service providers will also compete on services rather than on capacity or coverage, but will not be in the position to develop and to deliver all these next generation mobile communications based services required by corporate and private end-users. In fact, operators cannot aspire to build and to maintain expertise in all possible new service, business and technology domains; rather they will focus their efforts on specific areas where their core competencies lie. (Note that applying current Internet trends of fast applications / services burn rate to 3G networks, hundreds of new applications and services will have to be developed and marketed within tight time-frame.) Consequently, 3G operators and service providers are expected to join forces with external parties such as Value Added Service Providers, ASPs or Specialised Portals in order to create and to deliver these innovative products and services. This trend has already started at the introduction of WAP and mobile portal services.

In order to prepare for the challenging new era characterised by collaborative service creation, delivery and management, the current semi-open business model currently prevailing in the mobile communications industry needs serious amendments. (Until now GSM operators have typically implemented -integrated, hosted - (re-) packaged, bundled and re-sold products and services, obtained from their suppliers, either directly or via service providers or channel partners to their customers.) In order to be able to co-operate, 3G network operators will have to open up their network to third party service providers, in a mutually controlled, secure and reliable manner. Besides in accelerating end-user applications development and integration, an open network (service) interface is expected to result in a/o cost reduction and superior service quality.

As a matter of fact, this shift in business model coincides with the European Union directives that envisage open interconnection of and access to communications network systems. These directives aim at promoting competition on the one hand, and the development of advanced communications infrastructure on the other hand. This not only to boost competitiveness of the European economy, but also in order to enhance the quality of everyday life through an ever richer and affordable set of global multimedia services (e.g. flexible workplace, social values, security, etc,).

Last but not least, following the e-economy trends, 3G mobile communications network operators and service providers will develop and implement e-business solutions in order to do business more efficiently, in terms of speed, costs, service level, flexibility, by using customer intelligence to increasingly meet customer requirements, etc. In this context business processes of the 2G operator will spill over and extend to suppliers, partners, customers, authorities and even to the home environment of employees. This means that the integration challenge will lie not only on technical and end-user products and services level, but also on business level (e.g. service management or supply chain management in general).

An objective of the invention is to provide a high-level (conceptual) description of how to open up managed mobile network service capabilities to third parties in a controlled, secure, reliable and efficient way. This in order to enable various Internet and Telecom ventures to offer services through and in co-operation with the mobile network.

The invention provides a solution for the above referred to problem and objectives. The network system, according to the invention is characterised in that the network system further comprises one single, generic interface that enables communication between mutually independent separate layers of the network system on the one hand and mutually independent separate layers of the service providers on the other hand wherein the said layers of both the network system and the service providers, comprise of a layer for management (Business & Operations Support System), an application layer, a service enablers layer, a control layer and a data transport network layer (multimedia traffic, including but not limited to voice and video, is considered as data traffic).

Hence, the network system comprises a controlled and managed commercial and technical interface towards the outside world of the network system comprising of content providers, application developers, service providers, suppliers, etc. The core values delivered through the interface may focus around electronic transport/connectivity, revenue collection from the end-user, authentication of the end-user and sale of information exclusively available from the network system such as credit ratings, user behaviour or user location.

The single interface may fulfil complex requirements for the management of the commercial relationship, revenue sharing, billing and charging, provisioning, business transactions, etc.

It is noted that an interface between control layers, an interface between data transport layers, and an interface between service enablers layers are known as such. The present innovation however provides a single interface which not only provides communication between the data transport network layers, between the control layers and between the service enablers layers, but also between the application layers and between the layers for management (and support). It is noted that all layers are network/functionality specific except for the application layers.

Especially between the layers for management, provide the possibility for the network system operator to seamlessly integrate information from service providers within the network system for providing services to the end-user which services come from the service provider and for exchanging related business information between the network system and the service providers. The exchange of business information is provided by the communication between the management layers.

According to the preferred embodiment of the invention the network system is characterised in that said layers also comprise a personal service environment (hereinafter: PSE) layer.

Preferably the interface provides communication links between layers of the same type of the network system and the service providers (or other third parties) respectively.

To be more specific the interface provides a communication link between: the layer for management of the service provider; the application layer of the network system and the application layer of the service provider; the service enablers layer of the network system and service enablers layer of the service provider; the control layer of the network system and the control layer of the service provider; and the data transport network layer of the service provider.

According to the embodiment of a special embodiment of the network system the interface also provides a communication link between the application layer of the network system and the service enablers layer of the service provider; and the service enablers layer of the network system and the application layer of the service provider.

Preferably, the layer for management comprises a business level, service management level, network and network element management level. Preferably, the service management layer is further divided into a customer care layer and a service development and operations layer.

The application layer, the service enablers layer, control layers and transport layers are usually for providing services to the end-users. The personal service environment layers are also for providing services to the end-users. The layers for management are for integration between the network system and the service providers from a management point of view.

Preferably, the interface also provides communication links between layers of the network system and between layers of the service provider. This means that not only 'horizontal' communication links are provided between layers of the network system on the one hand and layers of the service providers. The latter communication links may be noted as vertical communication links.

The invention also relates to an interface of the network system according to the invention.

A possible embodiment of the network will now be discussed with reference to the accompanied drawings:
Figure 1 shows a possible embodiment of a network including an interface according to the present invention.
Figure 2 shows a possible embodiment of the management, BSS and/or OSS layer of figure 1; and
Figure 3 shows a possible embodiment of the actual connection for interworking and interoperability of the management layers of figure 1. Furthermore, Annex 1 explains the abbreviation used in this patent application.

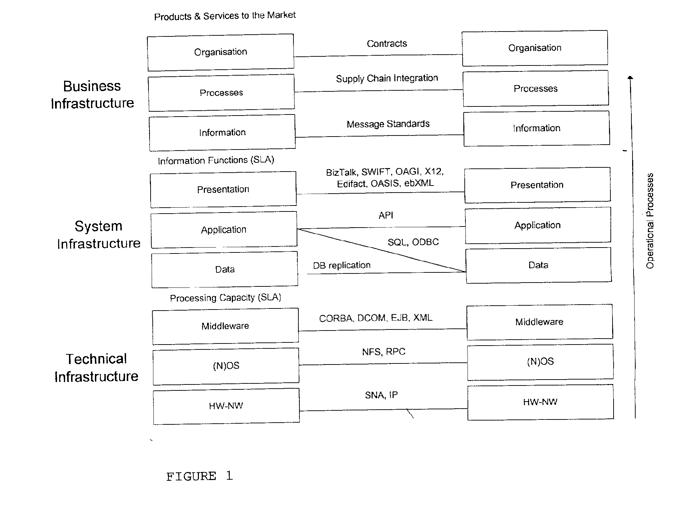

Figure 1 shows a networksystem for connecting at least one end-user 2 and at least one service provider 4 such as a value added service provider, an application service provider, a supplier or a specialised portal. The connection is such that information between the end-users on the one hand and service providers on the other hand can be exchanged.

The network system is a mobile networksystem for wireless communication between the network 1 and the end-user 2. Multiple end-users 2 may communicate with each other in a known manner via the network system 1. This is known as such and will not be discussed within the context of this invention. The innovation focuses on communication between the at least one service provider 4 on the one hand and the at least one end-user 2 and the network system 1 on the other hand, as well as on the communication between the network system 1 on the one hand and at least service provider 4 on the other hand.

The network system 1 comprises of a transport layer 1.1, a control layer 1.2, a service enablers layer 1.3 and an application layer 1.4. Similarly the at least one service provider 4 comprises a network, transport network layer 4.1, a control layer 4.2, a service enablers layer 4.3 and an application layer 4.4. The transport layers 1.1 and 4.1 are physical layers for the transport of data (multimedia traffic, including but not limited to voice and video, is considered as data traffic).

The communication link 6.1 is a physical link for providing transport of data (multimedia traffic is considered as data traffic) between the transport network layers 1.1 and 4.1 via cable, glassfibres, or wireless data connections. The control layer 4.1 provides the means to manage (establish, tear-down, etc.) the data transport layer, i.e. a connection between two or more end-points, as well as means to carry a so-called signalling traffic towards service enablers. The service enablers 1.3 are building blocks and infrastructure elements used to create services. The application layer 1.4 is typically represented by a software. The idea is that one should have a given product of services, which is supplied in a specific way by the end-user. An application of a mobile network is voice telephony. Another is to conduct electronic businesses. These applications are typically implemented by a piece of software. The same definition applies respectively for the transport layer 4.1, control layer 4.2, service enablers layer 4.3, and application layer 4.4.

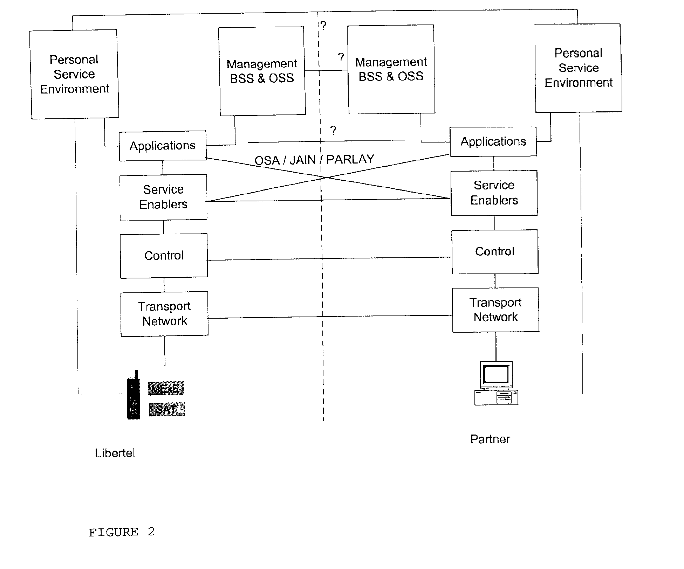

The network further comprises a management layer, comprising of BSS and OSS, denotes as layer 1.5. BSS stands for Business Support System. These systems support the business such as order intake, accounting, logistics, etc. OSS stands for Operations Support System. These systems are for supporting the network operations. While BSS is constructed top-down, OSS is typically bottom-up. For example the collection of fault events from the network system for intervention and for statistical purposes are performed by operations support systems. Further possible details of the management layer are shown in figure 2.

The service provider 4 is provided with a similar management layer, comprising of BSS and OSS, referred to as layer 4.5 in figure 1. This layer performs the same principle tasks for the service provider 4 as the tasks discussed for the management layer 1.5 for the network 1 in the specific context of the service provider.

Furthermore, the network 1 comprises a personal service environment layer 1.6. Similarly, the service provider 4 comprises a personal service environment layer 4.6. The service provider 4 is further provided with computing terminal equipment 8, which is connected to the transport layer 4.1

The network system 1 is further provided with an interface which provides a communication link 6.1 between the transport network layer 1.1 and the transport network layer 4.1. This communication link 6.1 is a physical connection as discussed above. The interface also provides a communication link 6.2 between the control layer 1.2 and control layer 4.2. The communication link 6.2 is generally not a direct connection between the control layer 1.2 and the control layer 4.2. Usually the connection, that is to say the data transport network between the control layer 1.2 and the control layer 4.2 is via the transport network 4.1. In figure 1, the communication link which enables information exchange between the control layer 1.2 and the control layer 4.2 is shown by the communication link 6.2. This link is provided by the interface. Hence these layers may be integrated without being noticed by the end-user 2 and may exchange information with the end-user as one integrated whole. Similarly, the interface provides a communication link 6.3 between the service enablers layer 1.3 and the service enablers layer 4.3. Hence these layers may be integrated without being noticed by the end-user 2 and may exchange information with the end-user as one integrated whole. Furthermore, the interface provides a communication link 6.4 between the service enablers 1.3 and the applications 4.4. It also provides a communication link between the application layers 1.4 and the service enablers 4.3. In this example, the interface also provides a communication link 6.4 between the application layer 1.4 and the application layer 4.4 in a similar manner. Hence these layers may be integrated without being noticed by the end-user 2 and may exchange information with the end-user as one integrated whole. Furthermore, the interface provides a communication link 6.5 between the management layer 1.5 and the management layer 4.5. The communication link carries the reference number 6.5. Hence, the communication link provides the possibility to exchange management information between the layer 1.5 on the one hand and the layer 4.5 on the other hand without being noticed by the end-user. This may be for billing the end-user for providing information from the network 2 and the service provider 4 and for settlement between the network 2 and the service provider 4, etc. Finally, the interface provides a communication link 6.6 between the personal service environment layer 1.6 and the personal service environment layer 4.6.

Please note that the communication links 6.2-6.6 which are provided by the interface which are shown as direct connections in figure 1 may in fact be virtual connections. Basically the data between those layers are physically transported via the communication link 6.1. For example, data which have to be exchanged between the management layer 1.5 and the management layer 4.5 will be transported via the application layer 1.4, service enablers layer 1.3, control layer 1.2, network layer 1.1, communication link 6.1, a network layer 4.1, a control layers 4.2, service enablers 4.3, application layer 4.4. and vice versa.

Note that all the elements in figure 1 are network/functionality specific, except for PSE 1.6, 4.6 and the application layers 1.4 and 4.4. The PSE layer 1.4 contains subscriber/user and service profile data and it is made directly accessible for the customer for self-service, e.g. self-provisioning. As illustrated the subscriber / user 2 may have its profile distributed across organisations with which he has commercial or other relations. Synchronisation or exchange of profile data may be possible between the network system 1 and the service provider 4. The interface between the two management systems of layers 1.5 and 4.5 can be further split according to the already existing TMN (Telecommunications Management Network) model into business level, service management level, network and network element management level.

At the business level, traditional enterprise applications such as ERP or SCM (Enterprise Resource Planning or Supply Chain Integration) software suites are found. At the service management and network management, level front- & back-office systems are situated covering customer care processes, service development and operations processes, as well as network and system management processes. Information may flow in an automated manner between and across the various systems within the network system 1, within the service provider 4, or through the interface between them. Note that the same interface is susceptible to connect to suppliers, customers and service provider partners.

Depending on the implementation, e\m-commerce transactions (exchange of electronic goods against payments) take place at the applications' level and the service enablers' level (that includes the payment platform). However, some transactions may take place at the business or service management level such as ordering services from a bank through the mobile terminal (in this case the order processing has to be automated towards the bank's information system).

The interface enables an unlimited number of applications. The interface may support new business and service models wherein subscriber/end-user is served by physically distributed service community of service eco-system. It may connect applications/servers, control and connectivity layers necessary for the provision of the services as received by the end-user as well as business and operations support and management system. The interface may use an existing mobile telephone network (control and transport network layer) for transport. It provides a common interface to external service providers such as value added service providers, application service providers, suppliers and specialised portals. The interface can support multiple parallel operations for the same end-user, even if multiple service providers are involved in these transactions. The interface can support both the customer lifecycle (from order intake to the end of all commercial contact) and the application lifecycle (from its plan and design until its revocation). In practice, the glue that integrates various service providers, processes and application shall be the commonly served customer. Therefore a common customer identity is required. This approach also has the advantage that services can be provided in a transparent manner to the end-user even if multiple parties are involved in the delivery of the service. The interface can allow collecting data (e.g. usage) both for accounting/billing and analytical purposes (e.g. customer behaviour or service usage analysis). The interface can support applications running on various systems and hardware from various vendors, including distributed environments, without the need to reengineer the whole interface in response to the development of new technology. The platform supporting the interface can be reusable for internal purposes such as horizontal and vertical back- and front-office integration. The interface can be built on multi-service networks. It also enables to develop a meaningful SLA. It can support billing and accounting based on volume, quality of service, applications, events and transactions both off-line and online. The tariff information shall be extracted form the billing system of the party in charge of the service used. Furthermore, the interface can hide internal network architecture. Each layer in the interface may be independent of the underlying layer. The interface may be implemented based on interoperable and portable modular, commercially available, standard components.

The management and support layer 1.5 can be for example modelled as shown on figure 2.

In figure 2 a physical network and IT layer 10, an element layer 12, a network and system management layer 14, a service development and operations layer 16, and a customer service layer 18 are shown. The layers 12-18 belong to the business layer and layer 10 is corresponding to the layer 6.1.

The layers 14, 16, 18 map to the network management and service management layers as defined in the widely accepted TMN model. The functional entities involved into the different processes (Customer Interface Management, Customer Care, Service/Product Development and Maintenance, Network and Systems Management as well as Physical and Information Technology process) map to the TMN functions (Fault, Configuration, Accounting, Performance and Security management) as defined in the Telecommunications Management Network architecture.

The interface shall allow split of functions between a network system operator and external parties both vertically (process-wise) and horizontally, i.e. within a specific layer. As an example, the interface shall allow that substantial part of network and system management layer to be outsourced to a Managed Service Provider. An example for the need to integrate vertical processes between the network system and the service provider for automated service provisioning starting from order capture and ending in network equipment initialisation.

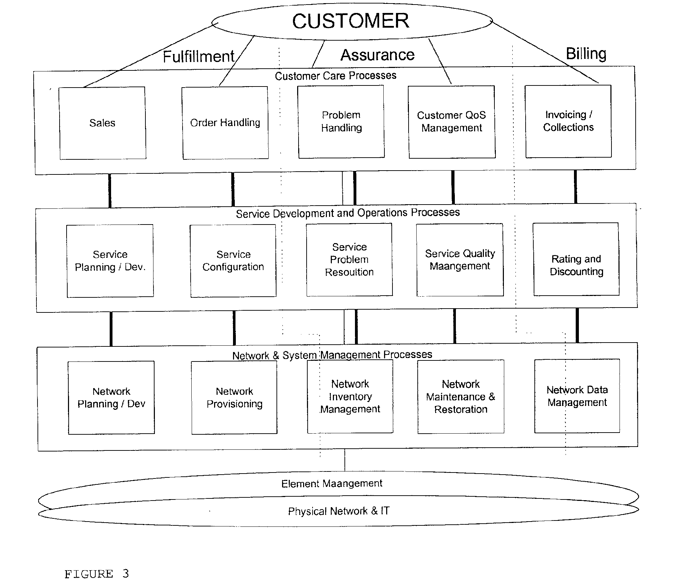

The interworking and interoperability of the management and support system layers may require for example the communication layers as shown in figure 3.

A way to fulfil these requirements is to build an integration framework. This integration framework shall allow peer-to-peer interworking for the sake of automatic exchange of information as well as process automation i.e. one module or a complete layer shall be possible to run outside Libertel. (Note this can also be the case if operation and management is partly outsourced).

Each layer in the integration framework can be separated from the adjacent layers. Integration and process flow-through implies a common network and service data model. For the latter XML/SGML seems to be the appropriate tool, together with some semantics orientated industry standard such as Biztalk or Oasis defining what data shall be exchanged between the various parties. The same integration framework can be used at least for e/m-commerce and integration of personal service environments.

The invention is not limited to the above special embodiment. It may be used both for a mobile communication network as a fixed communication network. Such variations each fall within the scope of the present invention.

### Annex

**Value added service provider:** provides value added services. Actually it is a service provider that uses the network as a basis to build specific, high-value services. An example is to operate a toll-free number.
**ASP:** Application Service Provider. It provides software as a service, very roughly. E.g. one does not install Microsoft Word on a laptop but access it with a browser via the Internet.
**Specialised portals:** portals with specific characteristics. E.g. they serve a specific market segment or interest, such as the Automotive Industry.
**UMTS:** Universal Mobile Telecommunications System. The third generation of mobile communications networks / systems (GSM is considered as the second generation).
**R2000:** release 2000, i.e. that specific version of the UMTS standards (there is already release 1999 and there will be Release 2001).
**Personal Service Environment:** set of data, services, features, etc. Anything that is meaningful for the customer and that he/she is using in relation to the communications services or value-added services such as stock information. This can include passwords, phone books, list of subscriptions, etc. The idea is that the subscriber should be able to manage these data directly. In the broadest sense, however, Personal Service Environment would include other data on the customer (or set of customers) seen only by the service provider. Such an example is average revenue per month (how much money he spends to us), history of whether he always paid duly etc.
**BSS:** Business Support System. Various systems supporting the business. E.g. order intake system, accounting system, etc. Further details you find in Figure 2 in the document (business management layer, service management layer, network management layer and network element management layer).
**OSS:** Operations Support System. Various systems supporting the network operations. While BSS is top-down, BSS is typically bottom-up. E.g. collection of fault events from the network for intervention and for statistical purposes (evaluate the level of service the given customer has actually received).
**Applications:** typically a software. The idea is that one has a given product of service which is applied in a specific way by the end-user. An application of the mobile network is voice telephony. Another is to conduct electronic business. These applications are typically implemented by a piece of software.
**Service enablers:** building blocks and infrastructure elements for to create services.
**Control:** to control the establishment of the connection, the tear-down, etc. This is a so-called signalling part of the network that controls the transport level.
**Transport:** the bit-pipe part. This is a conduct that connects people to people, machines to machines, etc. While IP can be the transport level, another technology (the signalling) can be SIP (Session Initiation Protocol).
**MeXE:** Mobile eXecution Environment. A platform in the terminal where software can run. In addition, there are some elements needed in the network. WAP is a part of MeXE.
**SAT:** same as MeXE but for the SIM cards.
**OSA:** Open Service Architecture. Defines an interface to the mobile network through which certain capabilities are offered in a standardised way. An example is that OSA one can initiate a phone call to a subscriber being a company.
**JAIN:** same as OSA but based on the Java technology.
**PARLAY:** the equivalent effort of OSA for the fixed networks (Normal telephony).
**PSE:** Personal Service Environment.
**TMN:** Telecommunication Management Network. It defines a layered approached for Business and Operations Management for Telecommunications Networks.
**ERP:** Enterprise Resource Planning. Example: a Finance software package.
**SCM:** Supply Chain Integration. Integration of two companies for the delivery of goods. Example: a network can order in his ERP system a new equipment from a company and consequently the order enters automatically into the company's system. The order can be followed from the network ERP system, etc. Finally the goods are delivered, reception and the payment is done.
**SLA:** Service Level Agreement. Companies agree on a service level. E.g. 99,999% uptime (availability of a specific service such as voice call).
**BizTalk:** Microsoft initiative for business to business communication (e-business).
**SWIFT:** bank to bank communication. E.g. sending money.
**OAGI, X12, Edifact, OASIS ebXML** play similar roles as **SWIFT** and Edifact.
**API:** Application Programming Interface. An interface (input, output point) through which it is possible to communicate to an application (typically a software) from the outside (typically from another software). An example is that our SMS system can be given commands to send an SMS to me. The command is issued through the API which describes what commands exists, what are the parameters of those commands, etc.
**CORBA:** middleware. A middleware is between a hardware and the software. CORBA is used to integrate systems from different vendors. E.g. one may use CORBA to integrate our billing system from AMDOCS to the Prepaid system from LOGICA.
**DCOM:** object-based programming solution. Includes middleware functionality.
**EJB:** Enterprise Java Beans. Software artefacts used to build (typically Internet) applications.
**XML:** extensible Mark-up Language. A mark-up (description) language a bit similar to HTML. SGML is a superset of XML but serves similar purposes. Look XML as a practical implementation of SGML.
**NFS:** Network File Services, Used in Operation System to Operation Communication, file transfer, etc.
**RPC:** Remote Procedure Call. Used to interconnect two software. With RPC one software can instruct the other one to do specific things.
**SNA:** Systems Network Architecture (from IBM). An alternative to IP.
**IP:** Internet Protocol.
**(N)OS:** Network Operation System.
**HW:** Hardware (physical stuff).
**NW:** Netware (something for the network).
**SML:** Service Management Layer.
**NML:** Network Management Layer.
**EML:** Element Management Layer (refer to TMN).

## Claims

1. Network system for connecting end-users and service providers such as value added service providers, applications service providers, suppliers and specialised portals so that information between the end-users on the one hand and the service providers on the other hand can be exchanged, **characterised in that** the network system further comprises one single interface that enables communication between mutually independent separate layers of the network system on the one hand and mutually independent separate layers of the service providers on the other hand wherein the said layers of both the network and the service providers, comprise a layer of management, application layer, service enablers layer, a control layer and a data transport layer.

2. Network according to claim 1, **characterised in that** the said layers also comprise a personal service environment layer

3. Network according to claim 1 and 2, **characterised in that** the interface provides communication links between the layers of the same type of the network system and the service providers, respectively.

4. Network system according to claim 3, **characterised in that** the interface provides a communication link between: the layer for management of the network system and the layer for management of the service provider; the application layer of the network system and the application layer of the service provider; the service enablers layer of the network system and the service enablers system of the service provider; the control layer of the network system and the control layer of the service provider; and the data transport layer of the network system and the data transport layer of the service provider.

5. Network according to claims 2 and 4, **characterised in that** the interface also provides a communication link between the personal service environment layer of the network system and the personal service environment layer of the service provider.

6. Network according to claim 3,4, and 5, **characterised in that** the interface also provides a communication link between: the application layer of the network system and the service enablers layer of the service provider; and the service enablers layer of the network system and the application layer of the service provider.

7. Network according to any preceding claims, **characterised in that** the information which is exchanged between the end-users on the one hand and the service providers on the other hand is exchanged via the transport layers of the network and the transport layers of the service provider, respectively.

8. Network according to any preceding claims **characterised in that** the layers of management comprise a business level, service level, network and network element management level.

9. Network according to any preceding claims **characterised in that** application layers, service enablers layers, control layers and transport layers are for providing services to the end-users.

10. Network according to claims 2 and 9 **characterised in that** personal service environments layers are for providing services to the end-user

11. Network according to any preceding claims **characterised in that** the layer for management, are for integration between the network and the service provider from a management point of view.

12. Network according to any preceding claims **characterised in that** the interface also provides communication links between layers of network and between layers of the service provider.

13. Network according to any preceding claims **characterised in that** the interface comprises an intelligence that provides generic mechanisms to transport information between the layers of the network system and the service provider.

14. Interface of the network according to any preceding claims.
